# EUROPEAN PATENT APPLICATION

(11) **EP 2 226 977 A1**
(43) Date of publication of application: **08.09.2010**
(21) Application number: 09305193.6
(22) Date of filing: 03.03.2009
(51) Int. Cl.: H04L 12/56, H04L 12/28

(54) **Device and method for temporary storage of data packets**

(71) Applicant: Alcatel Lucent, 75008 Paris (FR)
(72) Inventor: Verlinden, Jan, 2160, Wommelgem (BE); Balint, Zoltan, 2150, Borsbeek (BE)
(74) Representative: BiiP cvba

(57) **Abstract**

The present invention is related to a device (1) for temporary storage of data packets to be retransmitted over a communication channel (7). The device comprises storage means (2) and preferably means (3) for receiving requests for retransmitting data over a communication channel (7). The device is **characterised in that** it is arranged for deriving information related to the status of at least the communication channel and for temporarily storing in the storage means the data packets to be retransmitted according to said status information. Preferably it is also arranged for retransmitting the stored data packets over the communication channel when a request thereto is received.

## Description

### Field of the Invention

The present invention generally relates to the field of temporary storage of data packets in the framework of retransmission schemes for use in systems for communication over lossy transmission media.

### Background of the Invention

A key element in a communication system is the medium used to transport information. Any failure at this level results in corrupted information or loss of information. Particular media are more prone to generating such failures than others. For instance, a radio wave link is more likely to introduce problems in the communication than an optical fiber link. Fiber links are well shielded from outside light, so no or little noise can be inserted into the information transported over the link. A radio wave link however, will easily interfere with other radio waves in the air. Thus, a radio link is to be considered a lossy medium, a fiber link is not. Another example of a lossy medium is a copper telephone wire which is used to transport xDSL (Digital Subscriber Line) signals between an access multiplexer e.g. a DSLAM and the customer premises equipment, e.g. an ADSL or VDSL modem of the end-user. The fact that some lines have low quality indeed constitutes a major problem for DSL, for WiMax etc. The physical layer (as currently defined) cannot solve all issues on the transmission medium, and hence there is a need for retransmissions.

When information is lost or the information is corrupted beyond repair, retransmission is a common method to recover the information. A receiver can track which information has been received in comparison to the information that was expected. At particular times the receiver may request the missing information to be retransmitted. In other words, the transmitter assumes correct delivery of each packet unless explicitly informed about a failure. Throughout the description below a packet or data packet means any set of bits/bytes transmitted as a group, typically having an overhead and payload section. It includes fixed length and variable length packets. Another retransmission scenario wherein the transmitter keeps track of all the information that was sent but is not yet acknowledged by the receiver requires more intelligence from the transmitter. Such intelligence involves recording the time between transmitting a packet and receiving an acknowledgement, and in case this time is too long or no acknowledgement is received, automatically retransmitting the packet.

Applications such as triple-play, which involve the combination of regular data, voice data and video data transfer on a single link, demand higher reliability from the networks between content provider and end user. Regular data transmission is generally not time or resource critical. Retrieving emails or a website can cope with short delays in the information stream. Voice data is more critical. Although the loss of a single voice packet goes unnoticed to the human ear, loss of various packets leads to serious audible noise. The influence of lost video packets is visible to the human eye. Therefore, traffic has to be prioritized in a triple-play setup so each type of traffic is delivered timely with the necessary reliability to reduce negative effects. As lossy media are a common part of access networks and increase the probability of incorrect packets significantly, they pose a severe difficulty in deploying a triple-play network.

One way to deal with retransmissions consists in the use of large cache servers. A cache server is a dedicated network server or service acting as a server that saves e.g. web pages or other Internet content locally. By placing previously requested information in temporary storage, or cache, a cache server both speeds up access to data and reduces demand on an end user's bandwidth. Cache servers also allow users to access content offline. However, such a solution is costly, as a large amount of storage required. On the other hand, having a copy of the transmitted data nearby (the cache server is assumed to be closer to the end-user than the original source), it can save bandwidth and reduce delay. Without such a cache server the response time could be too long and then the user would have noticeable impact since its application needs to wait for the retransmission of the corrupted packet.

Another solution is to implement retransmission at the physical layer, e.g. at the DSL physical layer. However, retransmissions on the physical layer require standardization and they only apply to a specific transmission medium. For example, when the access network contains multiple stages (e.g. first DSL, and then wireless in the house), there is only protection of the access part on which retransmission is implemented.

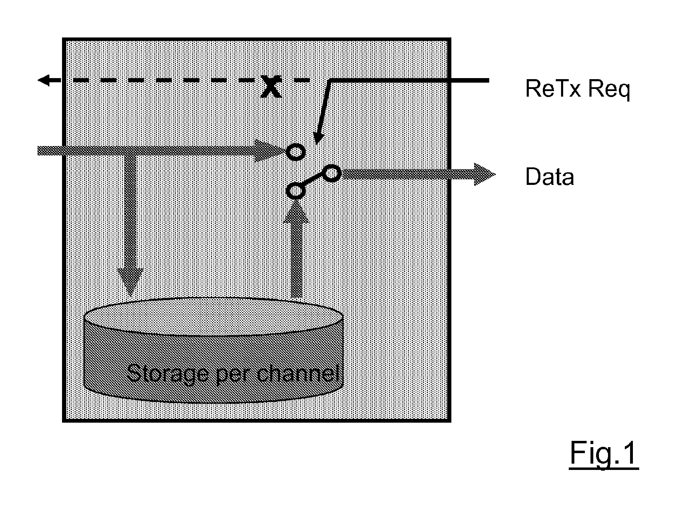

Fig.1 schematically illustrates a single channel retransmission as known in the prior art. A retransmission request is always captured. The switch allows switching to a retransmission of data stored in the cache.

Point-to-point solutions like retransmission at the physical layer cause in networks the phenomenon of Head Of The Line blocking (HoL), which is especially problematic for triple-play deployments. HoL blocking occurs when multiple links or data flows are aggregated onto a single flow. This typically appears in situations where First In First Out (FIFO) buffers are used in some way to improve network functionality. These buffers can be used to receive information packets from incoming links before they are forwarded on an outgoing link. For instance, a device having three incoming links and one outgoing link may contain three input buffers and one output buffer. These input buffers are used as a queue for received packets before they are transmitted onto the outgoing link. Head of the Line blocking arises when information packets destined for a particular outgoing link cannot reach that link due to congestion on another link. For instance, if there are two outgoing links and three incoming links with buffers, HoL may arise when one of the outgoing links is congested and all incoming link buffers have a packet for that link at the head of the buffers. Packets with a destination on the other outgoing link can no longer reach that link because their buffer is blocked by a packet for the congested link. Another example is when a particular high priority information packet is blocked due to retransmission of a low priority packet, for instance when both packets travel end-to-end and arrive on the same incoming link of a switching or routing device.

An example of physical layer retransmission is found in a solution implemented by Broadcom Corporation. Their solution is not standardized, but proprietary. Retransmission is run from within the chip set and a buffer is allocated for each incoming packet, for each line. Reference is made for example to the Broadcom contribution to the standardisation work in ITU Study Group 15, Question 4/15 "ADSL: G.INP: Updated working text for retransmission inside the PMS-TC" (September 15-19, 2008). The retransmission is performed between the Forward Error Coding and the scrambler, i.e. clearly at the physical layer.

In application EP1793537 a DSLAM is disclosed with a line card having a slot for connectivity to an insertable service blade, which can be used for retransmission of video in the DSLAM.

There is a strong need for suitable retransmission solutions, since users and operators are requesting a higher quality of service. Consequently, a low cost retransmission scheme that can be implemented without any need for standardization is desirable.

### Aims of the invention

The present invention aims to provide a method and device for temporary storage that can be used in schemes for retransmission of data packets over a lossy transmission medium.

### Summary

The present invention relates to a device for temporary storage of data packets to be retransmitted over a communication channel. The device comprises storage means. The device is arranged for deriving information related to the status of at least said communication channel and for temporarily storing, according to the status information, in the storage means the data packets to be retransmitted. This device can be implemented without the need for standardisation. The proposed solution can work with existing customer premises equipments (CPEs), without the need for changing their firmware (sometimes it is not possible to update their firmware, or the retransmission algorithm is too complex for the existing hardware). All this offers a clear benefit over physical layer retransmission. The device for temporary storage can be seen as an intelligent cache, as it contains the intelligence to derive the information related to the status of the communication channel and to decide on temporary storage according to said derived status information.

I n a most preferred embodiment the device comprises means for receiving requests for retransmitting data over a communication channel. From said requests the information related to the status can be obtained.

Preferably the device is also arranged for retransmitting the stored data packets when a corresponding request is received for retransmission of said data packets over the communication channel.

The information on the status of at least said communication channel comprises in a preferred embodiment information on the degree to which communication over that communication channel is likely to be harmed by impairments affecting the channel performance. This degree is an indication of the level of vulnerability of the channel. It reflects whether or not there have already been many retransmissions on that channel in the past. If a certain channel over which data packets are to be transmitted is indicated as being of highly vulnerable, e.g. because that particular channel is known to be very sensitive to impulse noise and therefore has already had many retransmissions in the past, these data packets are stored in the device for temporary storage. The status information is advantageously derived from the requests for retransmission. More in general the status information providing an indication of the degree to which the channel is susceptible to performance impairments, is derived from the behaviour of the communication channel in question. This behaviour may be derived from databases wherein performance parameters of various kinds related to the communication channel are stored.

In an advantageous embodiment the device for temporary storage according to the invention further comprises processing means for processing various performance parameters used to derive the status information of the communication channel and for deciding on whether or not said data are effectively stored in the device before the data are retransmitted. Advantageously the storage means is also used for storing said status information or parameters used to derive the status information.

In another embodiment the storage capacity of the storage means is adaptable.

The communication channel is preferably a DSL communication line. It may be part of a DSL communication system. Alternatively, the communication channel is part of a WiMax system.

In another aspect the invention relates to an access node comprising a device for temporary storage as previously described. In an preferred embodiment the access node is a DSL access multiplexer device.

In yet another aspect the invention relates to a method for temporarily storing data packets to be retransmitted over a communication channel. The method comprises the steps of :
- deriving information related to the status of at least the communication channel,
- according to the status information storing temporarily data packets to be retransmitted, said data packets already having been transmitted a first time.
- retransmitting the temporarily stored data corresponding to the requests over the communication channel.

In a preferred embodiment the status information is derived from earlier requests for retransmission over said communication channel.

In another embodiment the method comprises the further step of receiving a request for retransmitting said temporarily stored data packets. Depending on the status information the stored data packets are then retransmitted over the communication channel. Alternatively the request for retransmitting is forwarded to a network device located deeper in the network.

### Brief Description of the Drawings

Fig. 1 illustrates single channel retransmission as known in the prior art.

Fig. 2 represents a block scheme of the device for temporary storage according to the present invention.

Fig. 3 represents an access multiplexer comprising the device for temporary storage of the invention.

Fig. 4 represents a performance comparison of the device of this invention and physical layer retransmission as known in the prior art.

### Detailed Description of the Invention

The drawbacks of the prior art solutions are overcome by the device for temporary storage according to the present invention. The invention proposes a device for temporary storage that uses its cache memory for the communication channels that really have some problem instead of just caching all data. The device for temporary storage (further also referred to as cache) is therefore provided with the necessary intelligence to decide whether or not data packets to be retransmitted on a given communication channel should be stored or not.

The main reason why retransmissions are taken care of by large cache servers is cost. When bringing the cache memory into an access node like a DSLAM in a DSL communication system, the cost increases (random access memory vs hard disk). Cache servers are designed for random retransmissions, which means it is assumed that every line has equal probability to have a lost packet and ask for a retransmission. Such assumption is valid in an Ethernet star/ring topology where the main reason for packet loss comes from collisions of Ethernet packets.

The present invention capitalises on the observation that communication systems like e.g. DSL or Wimax are completely different media. Packet loss in such communication systems is not random, but usually has a physical reason, e.g. for DSL pick up of impulse noise inside the house.

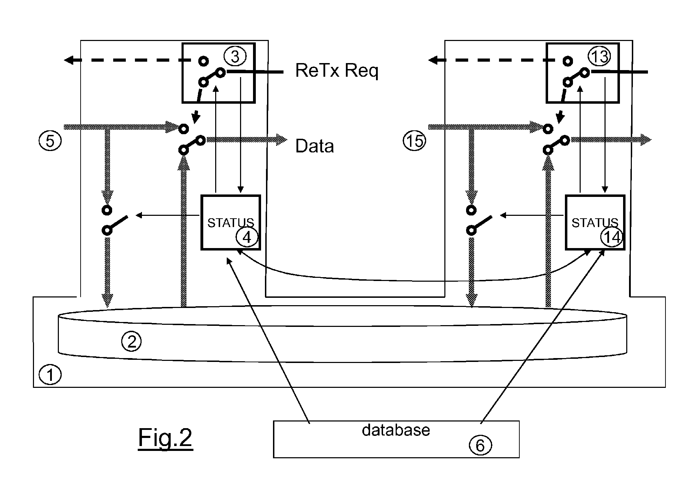

An embodiment of the intelligent cache of this invention is schematically represented in Fig.2. In the example shown two channels share the available cache storage capacity. The intelligent cache is capable of determining information related to the status of the various communication channels (in Fig.2 two). The status information can e.g. be obtained from the communication channel behaviour, e.g. as reflected in databases (6) wherein performance parameters of various kinds related to the communication channel(s) in question are stored. Advantageously there is a single database containing performance parameters of all communication channels. Alternatively, the cache device acts upon the amount of retransmissions requested by each line. As such, the intelligent cache device (1) then not only comprises cache memory (2) but further also comprises means (3, 13) to capture the retransmission requests. Optionally the retransmission requests are stored in the cache. From earlier requests for retransmission the status information can be derived in the device for temporary storage according to the invention.

In a preferred embodiments the retransmission requests comprise information related to the status (4,14) of the communication channel (7) used. Optionally information between 4 and 14 can be exchanged, for example to cache only the channels for which the vulnerability is highest. The device for temporary storage according to the invention is provided with the necessary intelligence for processing the retransmission requests. From the requests for retransmission information on the status of the communication channel is derived by the intelligent cache. The intelligent cache comprises processing means for extracting the status information from the requests, for processing the information and for taking a decision on whether or not the data packets to be retransmitted in the communication channel in question need to be stored in the intelligent cache or not. The processing means may be integrated with the means for capturing retransmission requests.

The status information gives an indication of the quality of the communication on that channel. The information may be obtained from a database (6) wherein performance parameters of the communication channel are stored. This information can reveal that in the past there already have been (lots of) retransmissions on that channel, possibly caused by bad wiring, long line, pick-up of impulse noise inside the house,... From such information it can then be deduced that there is a considerable risk that present or future communication on the channel is also impaired.

Depending e.g. on the amount of retransmissions asked by a particular line, the intelligent cache changes the status of such line. Optionally it also adapts the size of the cache assigned to the communication line accordingly. A status change of a communication channel may also be carried out based upon parameters like errored seconds (ES), severely errored seconds (SES), a cyclic redundancy check (CRC) sum etc ...However, it should be noted that performance parameters may be medium specific and cannot be used with any system. When employing retransmission requests, which are medium independent (e.g. TCP/IP retransmission requests) this drawback is avoided.

A few examples are now given. Lines that only have a low amount of retransmissions requests, are not cached by the intelligent cache at the DSLAM (so their retransmission requests are forwarded to a central cache server or even to the original source). As this happens only once in a while, it does not have significant impact on the user experience. On the contrary, lines having a high amount of retransmission requests, are cached locally by the intelligent cache at the DSLAM and as such the total amount of cache memory for these lines is increased.

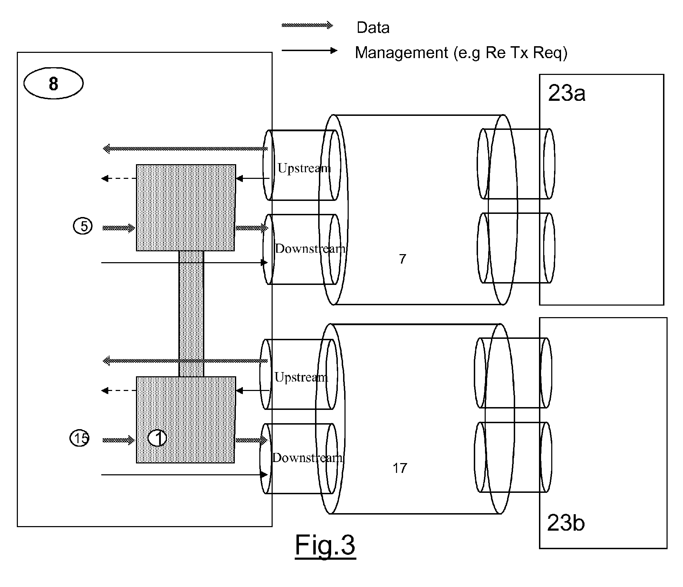

Fig.3 shows an access node wherein the intelligent cache of the invention is integrated. It shows an access multiplexer (8) and two DSL communication lines (7,17) with upstream and downstream channels for exchanging payload data and management information. An end user modem (23a, 23b) is connected to each line.

The invention offers the advantage that when a line with a lot of problems asks for a retransmission, this data can immediately be retransmitted by the DSLAM. Hence, there is no need to wait for the central cache server. As such, the user experience is not impacted, since the retransmissions are (almost) immediately available for the application.

The proposed solution is dedicated. It acts on bad lines that really need a fast retransmission, similar like the physical layer retransmission. Since it only acts on the lines that really need it (e.g. 25% of the lines), the cost of the implementation is reduced a lot (e.g. 4 x). Further, it doesn't act on good lines, which in fact don't really need such retransmission scheme. Such lines already have very good quality and no resources should be wasted to make them better.

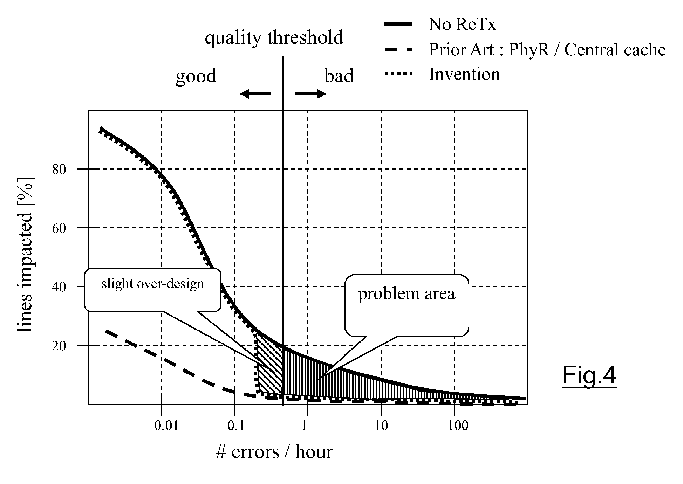

Fig.4 shows a comparison of the performance of the intelligent cache as in the invention and the prior art solution of retransmission at the physical layer. The curves are expressed as the percentage of communication lines that are impacted as a function of the number of errors per hour. Note that the numbers specified are just for illustrative purposes. As expected, there are much more lines with only a limited amount of errors per hour than lines that are heavily affected (i.e. that suffer from about 1 error or more per hour. In black line is indicated the performance when no retransmissions are used. The prior art solution wherein retransmission at the physical layer is used or wherein a central cache is used is shown with a dashed line. The performance obtained by applying the invention is shown with a dotted line. One can clearly see that this solution combines the good performance where errors are rare in the case no retransmission is used with the good performance in the range where errors occur more frequently, as in the case where a central cache or retransmission at the physical layer is applied.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Device (1) for temporary storage of data packets for retransmission over a communication channel (7), said device comprising storage means (2) and
**characterised in that** said device is arranged for deriving information related to the status of said communication channel and for temporarily storing, according to said status information, data packets for retransmission over said communication channel (7) in said storage means (2).

2. Device (1) for temporary storage as in claim 1 , further arranged for retransmitting said temporarily stored data packets over said communication channel.

3. Device for temporary storage as in claim 1 or 2, further comprising means (3) for receiving requests for retransmission over a communication channel (7).

4. Device for temporary storage as in any of claims 1 to 3, further comprising processing means (4) for processing said status information and for determining on storing said data packets to be retransmitted.

5. Device for temporary storage as in any of claims 1 to 4, whereby the storage capacity of said storage means (2) is adaptable.

6. Device as in any of claims 1 to 5, wherein said communication channel is a DSL communication line.

7. Device as in any of claims 1 to 5, wherein said communication channel is part of a WiMax system.

8. Device as in any of the previous claims, wherein said information on the status comprises information on the degree to which communication over said communication channel is susceptible to channel performance impairments.

9. Access node (8) comprising a device for temporary storage as in any of claims 1 to 8.

10. Access node as in claim 9, wherein said access node is a DSL access multiplexer device.

11. Method for temporarily storing data packets for retransmission over a communication channel (7), comprising the steps of :
- deriving information related to the status of said communication channel,
- according to said status information storing temporarily data packets for retransmission.

12. Method for temporarily storing data packets as in claim 11, wherein said status information is derived from requests for retransmission over said communication channel (7).

13. Method for temporarily storing data packets as in claim 11 or 12, further comprising the step of receiving a request for retransmitting said temporarily stored data packets.

14. Method for temporarily storing data packets as in claim 13, further comprising the step of retransmitting said temporarily stored data packets over said communication channel.

15. Method for temporarily storing data packets as in claim 13, further comprising the step of forwarding said request for retransmitting to a network device.
